# EUROPEAN PATENT APPLICATION

(11) **EP 4 421 595 A1**
(43) Date of publication of application: **28.08.2024**
(21) Application number: 23158660.3
(22) Date of filing: 27.02.2023
(51) Int. Cl.: G06F 3/03, H04N 5/445, H05K 7/14

(54) **CONTROL UNIT AND METHOD FOR DEPICTING A POSITION OF A CONNECTOR RECEPTACLE**

(71) Applicant: Bayerische Motoren Werke Aktiengesellschaft, 80809 München (DE)
(72) Inventor: Zaki, Tarek, 81829 München (DE)

(57) **Abstract**

A control unit (2) for depicting a position of a connector receptacle (4) located at an outer peripheral side of a display (3), a back of the display (3) or a recess compartment behind the display (3) is provided. The control unit (2) is configured to receive (S1) tap information that the display (3) has been tapped, and control (S2) the display to show a graphic (7) depicting the position of the connector receptacle (4) in response to the received tap information.

## Description

The present disclosure relates to a control unit for depicting a position of a connector receptacle, a display device with the control unit, a vehicle comprising the control unit and/or the display device, and/or a method for depicting a position of a connector receptacle. Additionally, or alternatively, the present disclosure relates to a computer program and/or a computer-readable medium comprising instructions which, when executed by a computer, cause the computer to at least partially carry out the method.

Displays and in-vehicle entertainment systems have become ubiquitous in vehicles. Unlike at home, the in-cabin environment is relatively dark, particularly in the night. A typical challenge that passengers are confronted with is laboriously finding the location of the connectors, e.g., USB connectors for charging and/or HDMI connectors for display projections. Some known vehicles illuminate these connectors. However, such an illumination may distract the passengers, e.g., while driving or when watching a movie. Additionally, such an illumination may only be possible if the connectors are located at a frontal surface in the field of view of the passenger. The latter is often not the case when the connectors are located at the side-/top-/bottom-peripheral sides of the display, at the back of the display, or even recessed in a compartment behind the display.

KR 20130100541 A describes a method of operating an image display device equipped with an input/output means, the method comprising the steps of: sensing movement of an object when the recognizable object is within a predetermined distance, creating a screen, and displaying a generated guide screen corresponding to a position where the input/output means is mounted.

KR 20100025709 A describes a method for guiding an input signal of an image display device, wherein an input signal sensor senses an effective external input signal which is inputted through a cable. A controller detects location information of a plurality of external input terminals stored in a memory unit. The controller offers the detected location information of the external input terminals through an on-screen display displayed by a display unit.

US 2018/0034297 A1 describes a method of assisting the use of a portable and rechargeable consumer electronic device on-board a vehicle. The method comprises determining that a portable consumer electronic device is connected to a controller on-board the vehicle, determining a charge characteristic of that consumer electronic device and, in dependence upon that charge characteristic, issuing information about the location of one or more charging ports that are provided on the vehicle.

In view of this prior art, the object of the present disclosure is to disclose a device and/or a method, each of which is suitable for enriching the prior art.

The object is solved by the features of the independent claims. The dependent claims provide optional further implementations of the disclosure.

Accordingly, the object is solved by a control unit for depicting a position of a connector receptacle located at an outer peripheral side of a display, a back of the display or a recess compartment behind the display.

The control unit is configured to receive tap information that the display has been tapped, optionally tapped once.

The control unit is configured to control the display to show a graphic depicting the position of the connector receptacle in response to the received tap information.

The control unit or control device may be part of or represent a driving assistance system. The control device may be, e.g., an electronic control unit (ECU). The electronic control unit may be an intelligent processor-controlled unit which can communicate with other modules, e.g., via a central gateway (CGW), and which, if necessary, may form (part of) the vehicle electrical system via field buses such as the CAN bus, LIN bus, MOST bus, FlexRay and/or via the automotive Ethernet, e.g., together with telematics control units and/or an environment sensor system.

The display may be a touchscreen. The touchscreen may be configured to determine a tapping, optionally single tapping, on the touchscreen.

The graphic may be shown while a rest of the display is dark and/or not illuminated. In other words, only the graphic may be shown on the display. The graphic may be an X-ray graphic and/or a fluorescence graphic.

The control unit described above provides several advantages. Among other things, the present disclosure provides an easy to implement technique for reliably depicting a position of a connector receptacle, even if said connector receptacle is arranged at a hidden position which is not directly visible by a user, such as a passenger in a vehicle.

Advantageously, the user can be easily guided to follow the location to plug-in a connector and/or a cable without awkward movement in the vehicle that may result in motion sickness, muscle ache or even driver distraction and impaired road safety. Additionally, the connector can be plugged into the connector receptacle without scratching any device surfaces, and without any help of, e.g., another passenger and/or any manuals.

Possible further implementations of the control unit described herein are explained in detail below.

The control unit may be further configured to control an overlay device to overlay a user's hand with a pointer and/or a motion towards the connector receptacle while the graphic is shown on the display.

The overlay device may comprise a light unit for producing a moving light projection representing the pointer and/or the motion towards the connector receptacle. The overlay device may comprise at least one time-to-flight sensor and/or at least one (in-vehicle) camera, e.g., for tracking a hand motion of the user's hand. The pointer and/or the motion towards the connector receptacle may be adjusted based on the tracked hand motion.

The control unit may be further configured to receive information regarding a plug and the connector receptacle being connected while the graphic is shown on the display.

The control unit may be further configured to control the display to show a feedback massage in response to the received information, the feedback massage indicating that the plug and the connector receptacle have been connected.

The control unit may be further configured to receive a measurement result regarding a location of connector receptacle with respect to the display (optionally a contour of the display adjacent to the connector receptacle), and calibrate a position and/or orientation of the graphic (when shown on the display) to the location of the connector receptacle based on the received measurement result. Advantageously, measurement result can be used for calibration purposes, e.g., during fabrication, after mounting the display (and/or the display device) in the vehicle.

The measurement result may be determined by and/or received from at least one optical sensor.

The received tap information may be distinctive to other tapping gestures for selecting other functions on the display, e.g., with respect to a tapping length and/or a tapping position on the display.

The control unit may be configured to determine whether the received tap information substantially corresponds a (predefined) reference tap information, e.g., by comparing the received tap information and the reference tap information. The control unit may be configured to control the display to show the graphic in response to the received tap information, if the received tap information substantially corresponds the reference tap information. Alternatively, or additionally, the tapping for triggering the tap information to be send to the control unit may be distinctive to other tapping gestures for selecting other functions on the display.

The foregoing may be summarized in other words and with respect to a possible more specific implementations of the disclosure as described below, wherein the following description is to be construed as not being limiting to the disclosure.

A graphic, such as an x-ray graphic, may be displayed on the display that depicts precisely the location of one or more invisible connectors to the users.

With a single tap on the display, the user may trigger a graphic mode, such as an "x-ray" graphic mode, that depicts precisely the location of the one or more invisible connectors to the users. To accommodate for manufacturing imperfections, the graphic may be well calibrated to the precise location of the connectors at the peripheral or at the back of the display. This may be achieved during fabrication, after mounting the display in the vehicle, by measuring the connectors with respect to the display contours using optical sensors. And accordingly, these parameters may be given to the system for displaying a calibrated image.

This way, the user may be easily guided to follow the location to plug-in a cable without awkward movement in the vehicle that may result in motion sickness, muscle ache or even driver distraction and impaired road safety, without scratching the device surfaces, and without the help of any other vehicle occupant. To improve the experience further, means, e.g., time-of-flight sensors as well as in-cabin cameras, may be used to overlay the user's hand with cable motion while its being plugged. And when a successful connection is detected, feedback may be given to the user on the display.

Furthermore, a display device comprising the control unit described herein is provided.

The display device comprises the display and the connector receptacle. The connector receptacle is located at an outer peripheral side of the display, a back of the display or a recess compartment behind the display.

The connector receptacle may be a USB receptacle and/or a HDMI receptacle.

What is described herein with respect to the control unit also applies analogously to the display device and vice versa.

Furthermore, a vehicle comprising the control unit described herein or the display device described herein is provided.

The vehicle may be a motor vehicle. The vehicle may be a passenger car, especially an automobile, or a commercial vehicle, such as a truck.

The display device and/or the display may be (optionally fixedly) arranged inside the cabin of the vehicle, such as arranged at a dashboard of the vehicle.

The vehicle and/or the display device may comprise an overlay device to overlay a user's hand with a pointer and/or a motion towards the connector receptacle while the graphic is shown on the display. The overlay device may be arranged inside the cabin of the vehicle.

What is described herein with respect to the control unit and the display device also applies analogously to the motor vehicle and vice versa.

Furthermore, a method for depicting a position of a connector receptacle located at an outer peripheral side of a display, a back of the display or a recess compartment behind the display is provided.

The method comprises receiving tap information that the display has been tapped, and controlling the display to show a graphic depicting the position of the connector receptacle in response to the received tap information.

The method may be a computer-implemented method, i.e., one, several or all steps of the method may be executed at least partially by a computer or a device for data processing, optionally the control unit.

What is described herein with respect to the control unit, the display device and the vehicle applies analogously to the method and vice versa.

Furthermore, a computer program is provided. A computer program comprises instructions which, when the computer program is executed by a computer, cause the computer to at least partially execute the method described herein.

A program code of the computer program may be in any code, especially in a code suitable for control systems of motor vehicles.

What is described herein with respect to the control unit, the display device, the vehicle and the method applies analogously to the computer program and vice versa.

Furthermore, a computer-readable medium, in particular a computer-readable storage medium, is provided. The computer-readable medium comprises instructions which, when the instructions are executed by a computer, cause the computer to at least partially execute or perform the method described herein.

Thus, a computer-readable medium comprising a computer program as defined herein may be provided. The computer-readable medium may be any digital data storage device, such as a USB flash drive, a hard disk, a CD-ROM, an SD card, or an SSD card (or SSD drive/SSD hard disk).

The computer program does not necessarily have to be stored on such a computer-readable storage medium in order to be made available to the vehicle, but may also be obtained externally via the Internet or otherwise.

What is described herein with respect to the method, the control unit, the display device, the computer program and the vehicle also applies analogously to the computer-readable medium and vice versa.

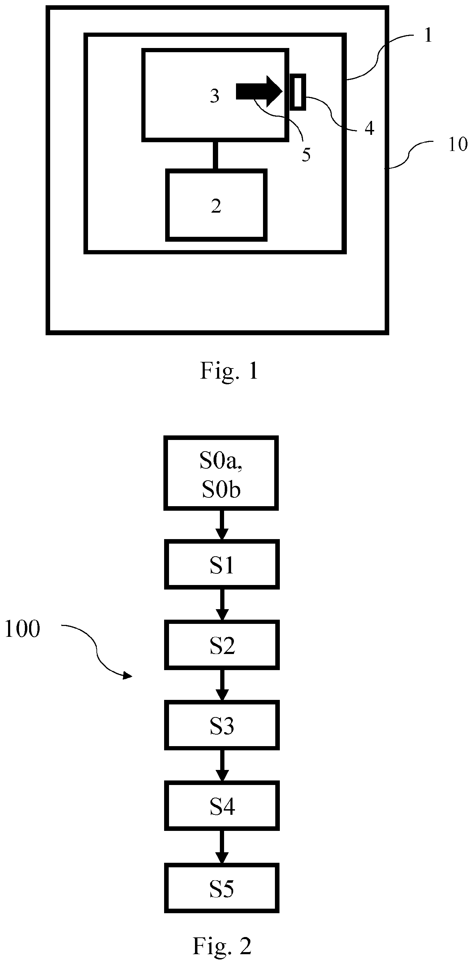

Optional embodiments are described below with reference to Figs. 1 and 2.
- Fig. 1: shows a schematic overview of a vehicle according to an embodiment of the disclosure; and
- Fig. 2: shows a schematic flow diagram of a method according to an embodiment of the disclosure.

The vehicle 10, which is only schematically shown in Fig. 1, comprises the display device 1.

The display device 1 comprises the control unit 2, the display 3 and the connector receptacle 4.

The connector receptacle 4 is located at an outer peripheral side of the display 3. Alternatively, the connector receptacle 4 may be located at a back of the display 3 or a recess compartment behind the display 3.

The connector receptacle 4 may be, e.g., a USB receptacle and/or a HDMI receptacle.

The control unit 2 is configured to depict a position of the connector receptacle 4 on the display 3. In order to do so, the control unit 2 is designed to execute the (control) method described below in detail with reference to Fig. 2.

In a first step S1, tap information that the display 3 has been tapped is received.

In a second step S2, the display 3 is controlled to show a graphic 5 in response to the received tap information. As an example, the graphic 5 may be an arrow pointing towards the connector receptacle 4.

In a third step S3, an overlay device may be controlled to overlay a user's hand with a pointer and/or a motion towards the connector receptacle 4 while the graphic 5 is shown on the display 3. Step S3 may be performed after the second step S2.

In a fourth step S4, information may be received regarding a plug and the connector receptacle 4 being connected while the graphic 5 is shown on the display 3.

In a fifth step S5, the display 3 may be controlled to show a feedback massage in response to the received information, the feedback massage indicating that the plug and the connector receptacle 4 have been connected.

Steps S4 and S5 may be performed consecutively after the second step S2. Additionally, step S4 may trigger to end optional step S3.

The method 100 may also comprise calibration steps S0a and S0b which may be performed before steps S1 to S5.

In calibration step S0a, a measurement result regarding a location of connector receptacle 4 with respect to the display 3 may be received. The measurements may be performed by one or more optical sensors which may be only used for these calibration purposes.

In a calibration step S0b, a position and/or orientation of the graphic 5 when shown on the display 3 to the location of the connector receptacle 4 may be calibrated based on the received measurement result.

### List of reference signs

- 1: display device
- 2: control unit
- 3: display
- 4: connector receptacle
- 5: graphic
- 10: vehicle

- 100: method
- S0a, S0b: method steps
- S1-S5: method steps

## Claims

1. Control unit (2) for depicting a position of a connector receptacle (4) located at an outer peripheral side of a display (3), a back of the display (3) or a recess compartment behind the display (3), **characterized in that** the control unit (2) is configured to:
- receive (S1) tap information that the display (3) has been tapped; and
- control (S2) the display (3) to show a graphic (5) depicting the position of the connector receptacle (4) in response to the received tap information.

2. Control unit (2) according to claim 1, **characterized in that** the control unit (2) is further configured to:
- control (S3) an overlay device to overlay a user's hand with a pointer and/or a motion towards the connector receptacle (4) while the graphic (5) is shown on the display (3).

3. Control unit (2) according to claim 1 or 2, **characterized in that** the control unit (2) is further configured to:
- receive (S4) information regarding a plug and the connector receptacle (4) being connected while the graphic (5) is shown on the display (3); and
- control (S5) the display (3) to show a feedback massage in response to the received information, the feedback massage indicating that the plug and the connector receptacle (4) have been connected.

4. Control unit (2) according to any of the preceding claims, **characterized in that** the control unit (2) is further configured to:
- receive (S0a) a measurement result regarding a location of connector receptacle (4) with respect to the display (3); and
- calibrate (S0b) a position and/or orientation of the graphic (5) when shown on the display (3) to the location of the connector receptacle (4) based on the received measurement result.

5. Display device (1), **characterized in that** the display device (1) comprises:
- the control unit (2) according to any of claims 1 to 4;
- the display (3); and
- the connector receptacle (4) located at an outer peripheral side of the display (3), a back of the display (3) or a recess compartment behind the display (3).

6. Display device (1) according to claim 5, **characterized in that** the connector receptacle (4) is a USB receptacle and/or a HDMI receptacle.

7. Vehicle (10), **characterized in that** the vehicle (10) comprises the control unit (2) according to any of claims 1 to 4 or the display device (1) according to claim 5 or 6.

8. Method (100) for depicting a position of a connector receptacle (4) located at an outer peripheral side of a display (3), a back of the display (3) or a recess compartment behind the display (3), **characterized in that** the method (100) comprises:
- receiving (S1) tap information that the display (3) has been tapped; and
- controlling (S2) the display (3) to show a graphic (5) depicting the position of the connector receptacle (4) in response to the received tap information.

9. A computer program comprising instructions which, when the program is executed by a computer, cause the computer to carry out the method (100) according to claim 8.

10. A computer-readable medium comprising instructions which, when executed by a computer, cause the computer to carry out the method (100) according to claim 8.
